(19) **Europäisches Patentamt**
**European Patent Office**
**Office européen des brevets**

(11) **EP 4 254 122 A2**

(12) **EUROPEAN PATENT APPLICATION**

(43) Date of publication:
**04.10.2023 Bulletin 2023/40**

(21) Application number: **23176488.7**

(22) Date of filing: **01.10.2019**

(51) International Patent Classification (IPC):
**G05D 1/02** (2020.01)   **B60W 30/00** (2006.01)
**G06N 3/00** (2023.01)

(52) Cooperative Patent Classification (CPC):
**G05D 1/0221; G06N 3/006; G06N 3/044;**
**G06N 3/045; G06N 3/084;** G05D 2201/0213

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(62) Document number(s) of the earlier application(s) in
accordance with Art. 76 EPC:
**19465568.4 / 3 800 521**

(71) Applicant: **Elektrobit Automotive GmbH**
**91058 Erlangen (DE)**

(72) Inventor: **Grigorescu, Sorin Mihai**
**81739 München (DE)**

(74) Representative: **Continental Corporation**
**c/o Continental Automotive Technologies GmbH**
**Intellectual Property**
**Putzbrunnerstr. 69**
**81739 München (DE)**

Remarks:
This application was filed on 31.05.2023 as a
divisional application to the application mentioned
under INID code 62.

(54) **DEEP LEARNING BASED MOTION CONTROL OF A VEHICLE**

(57)     The present invention relates to a nonlinear approximator (9) for use in a controller (1) for an automatic estimation of an optimal desired trajectory of an autonomous or semi-autonomous vehicle (50) for a constrained nonlinear model predictive controller (8). The approximator (9) is configured to use a learned behavioral model (2) and a learned disturbance model (3), which are encoded within layers of a deep neural network. The behavioral model (2) is responsible for estimating a behavior of a controlled system in different operating conditions and to calculate a desired trajectory. The disturbance model (3) is used for compensating disturbances.

FIG. 2

EP 4 254 122 A2

**Description**

The present invention is related to a controller for a vehicle, in particular for an autonomous or semi-autonomous vehicle, to a computer program implementing such a controller, and to an autonomous or semi-autonomous vehicle comprising such a controller. The invention is further related to a method, a computer program and an apparatus for training the controller. Furthermore, the invention is related to a nonlinear approximator for an automatic estimation of an optimal desired trajectory and to a computer program implementing such a nonlinear approximator.

In the last couple of years, autonomous vehicles and self-driving cars began to migrate from laboratory development and testing conditions to driving on public roads. Their deployment in the environmental landscape offers a decrease in road accidents and traffic congestions, as well as an improvement of mobility in overcrowded cities. An autonomous vehicle is an intelligent agent, which observes its environment, makes decisions and performs actions based on these decisions.

Currently, autonomous driving systems are based on separated environment perception systems, which pass the obtained information to path planners, which further pass a calculated path planning to a motion controller of the car.

Traditionally, autonomous driving systems map sensory input to control output and are implemented either as modular perception-planning-action pipelines [1], or as End2End [2] or Deep Reinforcement Learning [3] systems, which directly map observations to driving commands. In a modular pipeline, the main problem is divided into smaller sub-problems, where each module is designed to solve a specific task and offer input to the adjoining component. However, such an approach does not scale to a large number of driving scenarios and the intrinsic relations between perception, path planning and motion control are not taken into account.

Deep learning has become a leading technology in many domains, enabling autonomous vehicles to perceive their driving environment and take actions accordingly. The current solutions for autonomous driving are typically based on machine learning concepts, which exploit large training databases acquired in different driving conditions. In a modular pipeline, deep learning is mainly used for perception. The detected and recognized objects are further passed to a path planner which cc-the reference trajectory for the autonomous vehicle's motion controller. The motion controller uses an a priori vehicle model and the reference trajectory calculated by the path planner to control the longitudinal and lateral velocities of the car.

In contrast to modular pipelines, End2End and Deep Reinforcement Learning systems are model-free approaches, where the driving commands for the motion controller are estimated directly from the input sensory information. Although the latter systems perform better in the presence of uncertainties, they do not have a predictable behavior, which a model-based approach can offer. The stability is investigated here in the sense of the learning algorithm's convergence and not in the overall closed-loop stability principles.

It is an object of the present invention to provide an improved solution for deep learning based motion control of a vehicle.

This object is achieved by a controller, by a computer program code, which implements this controller, by a nonlinear approximator, by a computer program code, which implements this nonlinear approximator, by a method for training the controller, by a computer program code, which implements this method, and by an apparatus for training the controller according to the present disclosure. The dependent claims include advantageous further developments and improvements of the present principles as described below.

According to a first aspect, a controller for an autonomous or semi-autonomous vehicle is configured to use an a priori process model in combination with a behavioral model and a disturbance model, wherein the behavioral model is responsible for estimating a behavior of a controlled system in different operating conditions and to calculate a desired trajectory for a constrained nonlinear model predictive controller, and wherein the disturbance model is used for compensating disturbances.

Accordingly, a computer program code comprises instructions, which, when executed by at least one processor, cause the at least one processor to implement a controller according to the invention.

The term computer has to be understood broadly. In particular, it also includes electronic control units, embedded devices and other processor-based data processing devices.

The computer program code can, for example, be made available for electronic retrieval or stored on a computer-readable storage medium.

According to another aspect, a nonlinear approximator for an automatic estimation of an optimal desired trajectory for an autonomous or semi-autonomous vehicle is configured to use a behavioral model and a disturbance model, wherein the behavioral model is responsible for estimating a behavior of a controlled system in different operating conditions and to calculate a desired trajectory, and wherein the disturbance model is used for compensating disturbances.

Accordingly, a computer program code comprises instructions, which, when executed by at least one processor, cause the at least one processor to implement a nonlinear approximator according to the invention.

The term computer has to be understood broadly. In particular, it also includes electronic control units, embedded devices and other processor-based data processing devices.

The computer program code can, for example, be made available for electronic retrieval or stored on a computer-readable storage medium.

The proposed solution integrates the perception and path planning components within the motion controller itself, without having the need to decouple perception and path planning components from the motion controller of the vehicle, thus enabling better autonomous driving behavior in different driving scenarios. To this end, a deep learning based behavioral nonlinear model predictive controller for autonomous or semi-autonomous vehicles is introduced. The controller uses an a priori process model in combination with behavioral and disturbance models. The behavioral model is responsible for estimating the controlled system's behavior in different operating conditions and also to calculate a desired trajectory for a constrained nonlinear model predictive controller, while the disturbances are compensated based on the disturbance model. This formulation exploits in a natural way the advantages of model-based control with the robustness of deep learning, enabling to encapsulate path planning within the controller. In particular, path planning, i.e. the automatic estimation of the optimal desired trajectory, is performed by a nonlinear behavioral and disturbance approximator. The only required input to the controller is the global route that the car has to follow from start to destination.

In an advantageous embodiment, the behavioral model and the disturbance model are encoded within layers of a deep neural network. Preferably, the deep neural network is a recurrent neural network. Preferably, both models are encoded within the layers of a deep neural network. This deep neural network acts as a nonlinear approximator for the high order state-space of the operating conditions, based on historical sequences of system states and observations integrated by an augmented memory component. This approach allows estimating the optimal behavior of the system in different cases which cannot be modeled a priori.

In an advantageous embodiment, the deep neural network is composed of two or more convolutional neural networks and at least one long short-term memory. One challenge in using basic recurrent neural networks is the vanishing gradient encountered during training. The gradient signal can end up being multiplied a large number of times, as many as the number of time steps. Hence, a traditional recurrent neural network is not suitable for capturing long-term dependencies in sequence data. Under gradient vanishing, the weights of the network will not be effectively updated, ending up with very small weight values. The use of long short-term memories solves the vanishing gradient problem by incorporating three gates, which control the input, output and memory state.

According to yet another aspect, a method for training a controller according to the invention comprises:

- passing environment observation inputs through a series of convolutional layers, activation layers, and max pooling layers to build an abstract representation;
- stacking the abstract representation on top of previous system states and a reference state trajectory;
- processing the stacked representation by a fully connected neural network layer; and
- feeding the processed stacked representation as an input to a long short-term memory network.

Similarly, a computer program code comprises instructions, which, when executed by at least one processor, cause the at least one processor to train a controller according to the invention by performing the steps of:

- passing environment observation inputs through a series of convolutional layers, activation layers, and max pooling layers to build an abstract representation;
- stacking the abstract representation on top of previous system states and a reference state trajectory;
- processing the stacked representation by a fully connected neural network layer; and
- feeding the processed stacked representation as an input to a long short-term memory network.

Again, the term computer has to be understood broadly. In particular, it also includes workstations, distributed systems and other processor-based data processing devices.

The computer program code can, for example, be made available for electronic retrieval or stored on a computer-readable storage medium.

Accordingly, an apparatus for training a controller according to the invention comprises a processor configured to:

- pass environment observation inputs through a series of convolutional layers, activation layers, and max pooling layers to build an abstract representation;
- stack the abstract representation on top of previous system states and a reference state trajectory;
- process the stacked representation by a fully connected neural network layer; and
- feed the processed stacked representation as an input to a long short-term memory network.

The proposed solution may use the Bellman optimality principle to train the learning controller with a modified version of the deep Q-Learning algorithm. This allows estimating the desired state trajectory as an optimal action-value function.

In an advantageous embodiment, the environment observation inputs comprise synthetic and real-world training data. In particular, the training of the behavioral model may be based on synthetic generated data, while the disturbance model may be trained on real-world data. The use of synthetic generated data has the advantage that at least some of the necessary data can be provided without time-consuming test drives.

Advantageously, an autonomous or semi-autonomous vehicle comprises a controller according to the invention. In this way an improved autonomous driving behavior in different driving scenarios is achieved.

Further features of the present invention will become apparent from the following description and the appended claims in conjunction with the figures.

Figures

Fig. 1    schematically illustrates a controller according to the invention for an autonomous or semi-autonomous vehicle;
Fig. 2    schematically illustrates a nonlinear approximator used in a controller according to the invention for an autonomous or semi-autonomous vehicle;
Fig. 3    schematically illustrates a recurrent neural network;
Fig. 4    schematically illustrates a deep Q-network architecture for learning optimal driving trajectories;
Fig. 5    illustrates an autonomous driving problem space;
Fig. 6    schematically illustrates a method for training the controller according to the invention;
Fig. 7    schematically illustrates a first embodiment of an apparatus for training the controller according to the invention;
Fig. 8    schematically illustrates a second embodiment of an apparatus for training the controller according to the invention;
Fig. 9    illustrates a complete training workflow of the deep neural network of Fig. 4; and
Fig. 10   illustrates a complete deployment workflow of the deep neural network of Fig. 4.

Detailed description

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

Nonlinear model predictive control [4] and reinforcement learning [5] are both methods for optimal control of dynamic systems, which have evolved in parallel in the control systems and computational intelligence communities, respectively. In the following, a notation is used which brings together both the control system community and the computational intelligence community. Vectors and matrices are indicated by bold symbols. The value of a variable is defined either for a single discrete time step $t$, written as superscript $< t >$, or as a discrete sequence value on the interval $< t, t + k >$, where $k$ represents the sequence length. For example, the value of a state variable $z$ is defined either at a discrete time $t$ as $\mathbf{z}^{<t>}$ or for the sequence interval $\mathbf{z}^{<t,t+k>}$.

Herein, an approach is described, which follows a different paradigm, coined deep learning based behavioral constrained nonlinear model predictive control. It is based on the synergy between a constrained nonlinear model predictive controller and a behavioral and disturbance model computed in a deep reinforcement learning setup, where the optimal desired state trajectory for the nonlinear model predictive controller is learned by a nonlinear behavioral and disturbance approximator, implemented as a deep recurrent neural network. The deep network is trained in a reinforcement learning setup with a modified version of the Q-learning algorithm. Synthetic and real-world training data are used for estimation of the optimal action-value function used to calculate the desired trajectory for the nonlinear model predictive controller.

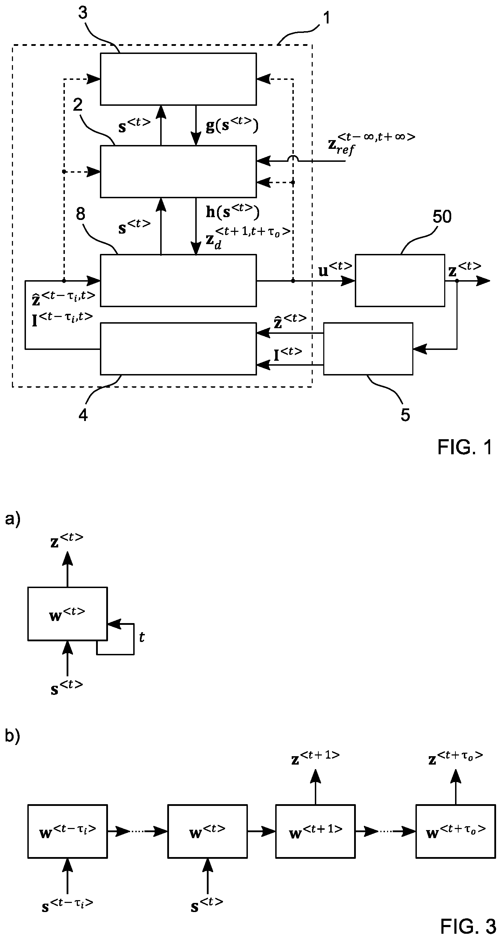

Fig. 1 schematically illustrates a controller 1 according to the invention for an autonomous or semi-autonomous vehicle. The desired trajectory $\mathbf{z}_d^{<t+1,t+\tau_o>}$ for a constrained nonlinear model predictive controller 8 is estimated by combined behavioral $\mathbf{h}(\cdot)$ and disturbance $\mathbf{g}(\cdot)$ models 2, 3, based on historical sequences $\mathbf{s}^{<t>} = (\mathbf{z}^{<t-\tau_i,t>}, \mathbf{I}^{<t-\tau_i,t>})$ of system states $\mathbf{z}^{<t-\tau_i,t>}$ and observations $\mathbf{I}^{<t-\tau i,t>}$, integrated by an augmented memory component 4 and provided by a localization and perception component 5. The only input required by the controller 1 is the global start-to-destination route $\mathbf{z}_{ref}^{<t-\infty,t+\infty>}$ for the autonomous car 50, which, from a control theoretical perspective, varies in the $[t - \infty, t + \infty]$ interval. $\tau_i, \tau_o$ and $t$ represent input and output horizons and discrete time, respectively. The dotted lines illustrate the flow of data used only during training. $\mathbf{u}^{<t>}$ is the control output provided by the controller 1. $\mathbf{z}^{<t>}$ is the real state of the vehicle, while $\hat{\mathbf{z}}^{<t>}$ is the estimated or measured state.

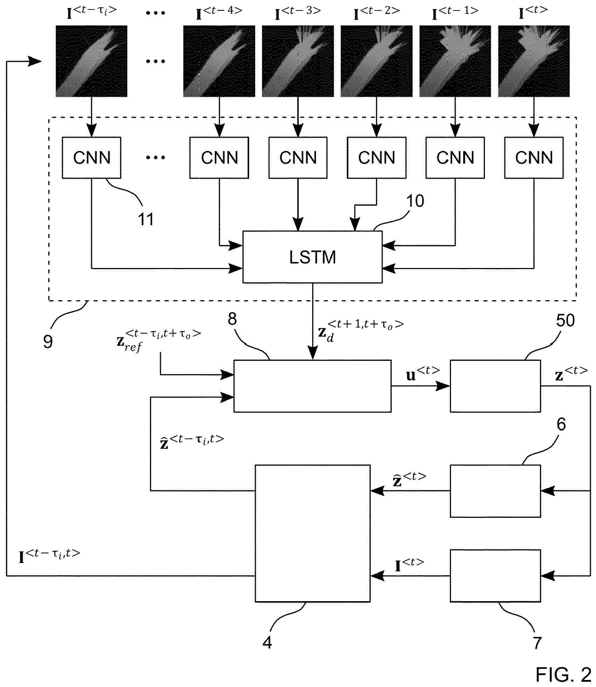

Fig. 2 schematically illustrates a nonlinear approximator 9 used in a controller 1 according to the invention for an autonomous or semi-autonomous vehicle 50. The nonlinear approximator 9 is configured to estimate the desired trajectory $\mathbf{z}_d^{<t+1,t+\tau_o>}$ for the constrained nonlinear model predictive controller 8 by combined behavioral $\mathbf{h}(\cdot)$ and disturbance $\mathbf{g}(\cdot)$ models. In this example, the observations $\mathbf{I}^{<t-\tau_i,t>}$ are provided as occupancy grids by a dedicated perception component 7, whereas the system states are provided by a dedicated localization component 6. As can be seen, the nonlinear approximator 9 is implemented as a deep neural network composed of a number of convolutional neural networks (CNN) 11 and at least one long short-term memory (LSTM) 10.

Over the course of the last couple of years, deep learning has been established as the main technology behind many innovations, showing significant improvements in computer vision, robotics and natural language processing. Among the deep learning techniques, recurrent neural networks are especially good in processing temporal sequence data, such as text or video streams. Different from conventional neural networks, a recurrent neural network contains a time dependent feedback loop in its memory cell. Given a time dependent input sequence $[\mathbf{s}^{<t-\tau_i>},...,\mathbf{s}^{<t>}]$ and an output sequence $[\mathbf{z}^{<t+1>},...,\mathbf{z}^{<t+\tau_o>}]$, a recurrent neural network can be unfolded $\tau_i + \tau_o$ times to generate a loop-less network architecture matching the input length, as illustrated in Fig. 3. In the figure, Fig. 3a) shows a folded recurrent neural network, whereas Fig. 3b) shows the corresponding unfolded recurrent neural network. $t$ represents a temporal index, while $\tau_i$ and $\tau_o$ are the lengths of the input and output sequences, respectively. Over time $t$, both the input $\mathbf{s}^{<t-\tau_i,t>}$ and output $\mathbf{z}^{<t+1,t+\tau_o>}$ sequences share the same weights $\mathbf{w}^{<\cdot>}$. An unrolled network thus has $\tau_i + \tau_o + 1$ identical layers, i.e. each layer shares the same learned weights $\mathbf{w}^{<\cdot>}$. Once unrolled, a recurrent neural network can be trained using the backpropagation through time algorithm. When compared to a conventional neural network, the only difference is that the learned weights in each unrolled copy of the network are averaged, thus enabling the network to share the same weights over time.

A main challenge in using basic recurrent neural networks is the vanishing gradient encountered during training. The gradient signal can end up being multiplied a large number of times, as many as the number of time steps. Hence, a traditional recurrent neural network is not suitable for capturing long-term dependencies in sequence data. If a network is very deep, or processes long sequences, the gradient of the network's output would have a hard time in propagating back to affect the weights of the earlier layers. Under gradient vanishing, the weights of the network will not be effectively updated, ending up with very small weight values.

To address this issue, the approach described herein uses a set of long short-term memory networks as non-linear function approximators for estimating temporal dependencies in occupancy grid sequences. As opposed to traditional recurrent neural networks, long short-term memories solve the vanishing gradient problem by incorporating three gates, which control the input, output and memory state.

Recurrent layers exploit temporal correlations of sequence data to learn time dependent neural structures. Consider the memory state $\mathbf{c}^{<t-1>}$ and the output state $\mathbf{o}^{<t-1>}$ in a long short-term memory network, sampled at time step $t$ - 1, as well as the input data $\mathbf{s}^{<t>}$ at time $t$. The opening or closing of a gate is controlled by a sigmoid function $\sigma(\cdot)$ of the current input signal $\mathbf{s}^{<t>}$ and the output signal of the last time point $\mathbf{o}^{<t-1>}$, as follows:

$$\Gamma_u^{<t>} = \sigma(\mathbf{W}_u \mathbf{s}^{<t>} + \mathbf{U}_u \mathbf{o}^{<t-1>} + \mathbf{b}_u), \qquad (1)$$

$$\Gamma_f^{<t>} = \sigma\left(\mathbf{W}_f \mathbf{s}^{<t>} + \mathbf{U}_f \mathbf{o}^{<t-1>} + \mathbf{b}_f\right), \qquad (2)$$

$$\Gamma_o^{<t>} = \sigma(\mathbf{W}_o \mathbf{s}^{<t>} + \mathbf{U}_o \mathbf{o}^{<t-1>} + \mathbf{b}_o), \qquad (3)$$

where $\Gamma_u^{<t>}$, $\Gamma_f^{<t>}$, and $\Gamma_o^{<t>}$ are gate functions of the input gate, forget gate, and output gate, respectively. Given a current observation, the memory state $\mathbf{c}^{<t>}$ will be updated as:

$$\mathbf{c}^{<t>} = \Gamma_u^{<t>} * \tanh(\mathbf{W}_c \mathbf{s}^{<t>} + \mathbf{U}_c \mathbf{o}^{<t-1>} + \mathbf{b}_c) + \Gamma_f^{<t>} * \mathbf{c}^{<t-1>}, \qquad (4)$$

The new network output $\mathbf{o}^{<t>}$ is computed as:

$$\mathbf{o}^{<t>} = \Gamma_o^{<t>} * \tanh(\mathbf{c}^{<t>}) . \qquad (5)$$

A long short-term memory network Q is parametrized by $\Theta = [\mathbf{W}_i, \mathbf{U}_i, \mathbf{b}i]$, where $\mathbf{W}_i$ represents the weights of the network's gates and memory cells multiplied with the input state, $\mathbf{U}_i$ are the weights governing the activations, and $\mathbf{b}_i$ denotes the set of neuron bias values. The operator $*$ symbolizes element-wise multiplication.

In    a    supervised    learning    setup,    given    a    set    of    training    sequences    D    =
$$\left[\left(\mathbf{s}_1^{<t-\tau_i,t>}, \mathbf{z}_1^{<t+1,t+\tau_o>}\right), \dots, \left(\mathbf{s}_q^{<t-\tau_i,t>}, \mathbf{z}_q^{<t+1,t+\tau_o>}\right)\right]$$ , that is, $q$ independent pairs of observed sequences with assignments $\mathbf{z}^{<t,t+\tau_o>}$, the response of a long short-term memory network $Q(\cdot;\Theta)$ can be trained using maximum likelihood estimation:

$$\widehat{\Theta} = \underset{\Theta}{\operatorname{argmax}} \mathcal{L}(\Theta; \mathcal{D})$$

$$= \underset{\Theta}{\operatorname{argmin}} \sum_{i=1}^{m} l_i\left(Q\left(\mathbf{s}_i^{<t-\tau_i,t>}; \Theta\right), \mathbf{z}_i^{<t+1,t+\tau_o>}\right) \qquad (6)$$

$$= \underset{\Theta}{\operatorname{argmin}} \sum_{i=1}^{m} \sum_{t=1}^{\tau_o} l_i^{<t>}\left(Q^{<t>}\left(\mathbf{s}_i^{<t-\tau_i,t>}; \Theta\right), \mathbf{z}_i^{<t>}\right) ,$$

where an input sequence of observations $\mathbf{s}^{<t-\tau_i,t>} = [\mathbf{s}^{<t-\tau_i>}, \dots, \mathbf{s}^{<t-1>}, \mathbf{s}^{<t>}]$ is composed of $\tau_i$ consecutive data samples, $l(\cdot,\cdot)$ is the logistic regression loss function, and $t$ represents a temporal index. In the present document, a network output sequence is defined as a desired behavioral trajectory $\mathbf{z}_d^{<t+1,t+\tau_o>}$ :

$$\mathbf{z}_d^{<t+1,t+\tau_o>} = \left[\mathbf{z}_d^{<t+1>}, \mathbf{z}_d^{<t+2>}, ..., \mathbf{z}_d^{<t+\tau_o>}\right]. \tag{5}$$

where $\mathbf{z}_d^{<t+1>}$ is a predicted trajectory set-point at time $t+1$. $\tau_i$ and $\tau_o$ are not necessarily equal input and output temporal horizons, namely $\tau_i \neq \tau_o$. A desired trajectory set-point $\mathbf{z}_d^{<t>}$ is a collection of variables describing the desired future states of the plant, i.e. in the present case the vehicle.

In recurrent neural networks terminology, the optimization procedure given in Eq. 11 below is typically used for training many-to-many recurrent neural network architectures, where the input and output states are represented by temporal sequences of $\tau_i$ and $\tau_o$ data instances, respectively. This optimization problem is commonly solved using gradient based methods, like stochastic gradient descent (SGD), together with the backpropagation through time algorithm for calculating the network's gradients. In the following, $\mathbf{s}^{<t-\tau_i,t>}$ will be defined as a sequence variable with data instances $[\mathbf{s}^{<t-\tau_i>}, ..., \mathbf{s}^{<t-1>}, \mathbf{s}^{<t>}]$ in a specific time interval $[t - \tau_i, t]$.

Consider the following nonlinear state-space system:

$$\mathbf{z}^{<t+1>} = \mathbf{f}_{true}(\mathbf{z}^{<t>}, \mathbf{u}^{<t>}), \tag{8}$$

with observable state $\mathbf{z}^{<t>} \sim \mathcal{N}(\bar{\mathbf{z}}^{<t>}, \Sigma^{<t>})$, $\mathbf{z}^{<t>} \in \mathbb{R}^n$ and control input $\mathbf{u}^{<t>} \in \mathbb{R}^m$, at discrete time $t$. The true system $\mathbf{f}_{true}$ is not known exactly and is approximated by the sum of an a priori model, a learned behavioral model and an experience-based learned disturbance model:

$$\mathbf{z}^{<t+1>} = \mathbf{f}(\mathbf{z}^{<t>}, \mathbf{u}^{<t>}) + \mathbf{h}(\mathbf{s}^{<t-\tau_i,t>}) + \mathbf{g}(\mathbf{s}^{<t-\tau_i,t>}), \tag{9}$$

with environmental and disturbance dependencies $\mathbf{s}^{<t>} \in \mathbb{R}^p$, where $\mathbf{f}(\cdot)$ is the a priori model, $\mathbf{h}(\cdot)$ is the behavioral model, and $\mathbf{g}(\cdot)$ is the disturbance model. Given a discrete sampling time $t$, $\tau_i$ and $\tau_o$ are defined as past and future temporal horizons, respectively.

$\mathbf{s}^{<t>} = (\bar{\mathbf{z}}^{<t-\tau_i,t>}, \mathbf{I}^{<t-\tau_i,t>})$ is defined as the system's state and the measured state of the environment, both at time $t$. $\mathbf{s}^{<t>}$ represents the set of historic dependencies integrated along time interval $[t - \tau_i, t]$ by the so-called augmented memory component.

The models $\mathbf{f}(\cdot)$, $\mathbf{h}(\cdot)$, and $\mathbf{g}(\cdot)$ are nonlinear process models. $\mathbf{f}(\cdot)$ is a known process model, representing the knowledge of $\mathbf{f}_{true}(\cdot)$, and $\mathbf{h}(\cdot)$ is a learned behavioral model representing discrepancies between the response of the a priori model and the optimal behavior of the system in different corner-case situations. The behavior and the initially unknown disturbance models are modeled as a deep neural network, which estimates the optimal behavior of the system in different cases which cannot be modeled a priori.

The role of the behavioral model is to estimate the desired future states of the system, also known as optimal desired policy. In this sense, a distinction is made between a given route $\mathbf{z}_{ref}^{<t-\infty,t+\infty>}$, which, from a control perspective, is practically infinite, and a desired policy $\mathbf{z}_d^{<t+1,t+\tau_o>}$, which is estimated over a finite time horizon $\tau_o$. In other words, $\mathbf{z}_d^{<t+1,t+\tau_o>}$ describes the quantitative deviation of the system from the reference trajectory, in order to cope with an unpredictable changing environment. Thus, by requiring as reference only a rough global state trajectory, it becomes possible to estimate the desired response of the nonlinear model predictive controller in a closed-loop manner. For the autonomous driving case, this translates to the route that the vehicle should follow from its start point to its destination. A deep recurrent neural network is used to estimate $\mathbf{h}(\cdot)$ and to calculate the desired policy $\mathbf{z}_d^{<t+1,t+\tau_o>}$ over a prediction horizon $[t + 1, t + \tau_o]$.

On top of the behavioral model's prediction of future desired states, the cost function to be optimized by the nonlinear model predictive controller in the discrete time interval $[t + 1, t + \tau_o]$ is defined as:

$$J(\overline{\mathbf{z}}, \mathbf{u}) = (\mathbf{z}_d - \overline{\mathbf{z}})^T \mathbf{Q}(\mathbf{z}_d - \overline{\mathbf{z}}) + \mathbf{u}^T R\mathbf{u}, \qquad (10)$$

where $\mathbf{Q} \in \mathbb{R}^{\tau_o n \times \tau_o n}$ is positive semi-definite, $R \in \mathbb{R}^{\tau_o M \times \tau_o M}$ is positive definite, $\mathbf{z}_d^{<t+1,t+\tau_o>} = \left[\mathbf{z}_d^{<t+1>}, \dots, \mathbf{z}_d^{<t+\tau_o>}\right]$ is a sequence of desired states estimated by the behavioral model, $\mathbf{z}^{<t+1,t+\tau_o>} = [\mathbf{z}^{<t+1>}, \dots, \mathbf{z}^{<t+\tau_o>}]$ is the sequence of predicted states, 2 is a sequence of mean values of z, and $\mathbf{u}^{<t,t+\tau_o-1>}$ $= [\mathbf{u}^{<t>}, \dots, \mathbf{u}^{<t+\tau_o-1>}]$ is the control input sequence.

The objective of constrained nonlinear model predictive control is to find a set of control actions which optimize the plant's behavior over a given time horizon $\tau_o$, while satisfying a set of hard and/or soft constraints:

$$\left(\mathbf{z}_{opt}^{<t+1>}, \mathbf{u}_{opt}^{<t+1>}\right) = \underset{\overline{\mathbf{z}}, \mathbf{u}}{\arg\min} J(\overline{\mathbf{z}}^{<t+1,t+\tau_o>}, \mathbf{u}^{<t+1,t+\tau_o>})$$

$$\text{such that } \mathbf{z}^{<0>} = \mathbf{z}^{<t>}$$

$$\overline{\mathbf{z}}^{<t+i+1>} = \mathbf{f}(\overline{\mathbf{z}}^{<t>}, \mathbf{u}^{<t>}) + \mathbf{h}(\mathbf{s}^{<t-\tau_i,t>}) + \mathbf{g}(\mathbf{s}^{<t-\tau_i,t>}), \qquad (11)$$

$$\mathbf{e}_{min}^{<t+i>} \le \mathbf{e}^{<t+i>} \le \mathbf{e}_{max}^{<t+i>},$$

$$\mathbf{u}_{min}^{<t+i>} \le \mathbf{u}^{<t+i>} \le \mathbf{u}_{max}^{<t+i>},$$

$$\dot{\mathbf{u}}_{min}^{<t+i>} \le \frac{\dot{\mathbf{u}}^{<t+i>} - \dot{\mathbf{u}}^{<t+i-1>}}{\Delta t} \le \dot{\mathbf{u}}_{max}^{<t+i>}, i = 0,1,\dots,\tau_o - 1$$

where $\mathbf{z}^{<0>}$ is the initial state and $\Delta t$ is the sampling time of the controller. $\mathbf{e}^{<t+i>} = \mathbf{z}_d^{<t+1>} - \mathbf{z}^{<t+1>}$ is the cross-track error, $\mathbf{e}_{min}^{<t+i>}$ and $\mathbf{e}_{max}^{<t+i>}$ are the lower and upper tracking bounds, respectively. Additionally, $= \mathbf{u}_{min}^{<t+i>}, \dot{\mathbf{u}}_{min}^{<t+i>}$ and $\mathbf{u}_{max}^{<t+i>}, \dot{\mathbf{u}}_{max}^{<t+i>}$ are considered as lower and upper constraint bounds for the actuator and actuator rate of change, respectively. The deep learning based behavioral nonlinear model predictive controller implements

$$\mathbf{u}^{<t>} = \mathbf{u}_{opt}^{<t>} \qquad (12)$$

at each iteration $t$.

Use is made of the quadratic cost function of Eq. 10 and the nonlinear optimization problem described above is solved using the Broyden-Fletcher-Goldfarb-Shanno algorithm [6]. The quadratic form allows applying the quasi-Newton optimization method, without the need to specify the Hessian matrix.

The role of the behavioral model is to estimate the optimal desired policy $\mathbf{z}_d^{<t+1,t+\tau_o>}$ using the temporal information stored in the augmented memory component and the reference trajectory $\mathbf{z}_{ref}^{<t-\infty,t+\infty>}$. To this end the robust temporal predictions of a long short-term memory networks are combined with a generative approach, which allows learning behavioral models from synthetic data obtained in a simulation environment. In the following, the behavioral modeling problem is formulated in a reinforcement learning setup.

Given a sequence of temporal synthetic observations $\mathbf{I}^{<t-\tau_i,t>} : \mathbb{R}^w \times \tau_i \to \mathbb{R}^w \times \tau_o$, the system's state $\mathbf{z}^{<t>} \in \mathbb{R}^n$ in $\mathbf{I}^{<t>}$, and a reference set-point $\mathbf{z}_{ref}^{<t+\tau_o>} \in \mathbb{R}^n$ in observation space at time $t$, the task is to learn a compensating behavior policy for navigating from state $\mathbf{z}^{<t>}$ to the destination state $\mathbf{z}_{ref}^{<t+\tau_o>}$, where $\tau_0$ is the number of time steps for which the set-point trajectory is planned.

In reinforcement learning terminology, the above problem can be modeled as a Markov decision process (MDP) $M := (S, Z_d, \mathcal{T}, R, \gamma)$. $S$ represents a finite set of states, $\mathbf{s}^{<t>} \in S$ being the state of the agent at time $t$. The state is defined as the pair $\mathbf{s}^{<t>} = (\mathbf{z}^{<t-\tau i,t>}, \mathbf{l}^{<t-\tau i,t>})$. $Z_d$ represents a finite set of behavioral set-point sequences allowing the agent to navigate through the environment defined by $\mathbf{l}^{<t-\tau i,t>}$, where $\mathbf{z}_d^{<t+1,t+\tau_o>} \in Z_d$ is the future predicted optimal behavior policy that the agent should perform in the next time interval $[t + 1, t + \tau_o]$. The behavioral policy $\mathbf{z}_d^{<t+1,t+\tau_o>}$ is defined as the collection of estimated trajectory set-points from Eq. 7, which are used by the nonlinear model predictive controller to compute the optimal control actions. $\mathcal{T} : S \times Z_d \times S \to [0,1]$ is a stochastic transition function, where $\mathcal{T}_{\mathbf{s}^{<t>}, \mathbf{z}_d^{<t+1,t+\tau_o>}}^{\mathbf{s}^{<t+\tau_o>}}$ describes the probability of arriving in state $\mathbf{s}^{<t+\tau o>}$ after performing the behavioral actions $\mathbf{z}_d^{<t+1,t+\tau_o>}$ in state $\mathbf{s}^{<t>}$. $R : S \times A \times S \to \mathbb{R}$ is a scalar reward function, which controls the estimation of $\mathbf{z}_d^{<t+1,t+\tau_o>}$, where $R_{\mathbf{s}^{<t>}, \mathbf{z}_d^{<t+1,t+\tau_o>}}^{\mathbf{s}^{<t+\tau_o>}} \in \mathbb{R}$. For a state transition $\mathbf{s}^{<t>} \to \mathbf{s}^{<t+\tau_o>}$ at time $t$, it is defined:

$$R_{\mathbf{s}^{<t>}, \mathbf{z}_d^{<t+1,t+\tau_o>}}^{\mathbf{s}^{<t+\tau_o>}} = \left\| \mathbf{z}_d^{<t>} - \mathbf{z}_{ref}^{<t+\tau_o>} \right\|_2 - \left\| \mathbf{z}_d^{<t+1>} - \mathbf{z}_{ref}^{<t+\tau_o>} \right\|_2 , \qquad (13)$$

where $\|\cdot\|_2$ is the L2 norm. The reward function is a distance feedback, which is smaller if the desired system's state follows a minimal energy trajectory to the reference state $\mathbf{z}_{ref}^{<t+\tau_o>}$, and large otherwise, $\gamma$ is a discount factor controlling the importance of future versus immediate rewards.

Considering the proposed reward function and an arbitrary set-point trajectory $T = \left[ \mathbf{z}_d^{<0>}, \mathbf{z}_d^{<1>}, \dots, \mathbf{z}_d^{<k>} \right]$ in observation space, at any time $\hat{t} \in [0,1,\dots, k]$, the associated cumulative future discounted reward is defined as:

$$R^{<\hat{t}>} = \sum_{t=\hat{t}}^{k} \gamma^{<t-\hat{t}>} r^{<t>} , \qquad (14)$$

where the immediate reward at time $t$ is given by $r^{<t>}$. In reinforcement learning theory, the statement in Eq. 14 is known as a finite horizon learning episode of sequence length $k$.

The behavioral model's objective is to find the desired set-point policy that maximizes the associated cumulative future reward. The following optimal action-value function $Q^*(\cdot,\cdot)$ is defined, which estimates the maximal future discounted reward when starting in state $\mathbf{s}^{<t>}$ and performing the nonlinear model predictive control actions $\mathbf{u}^{<t+1,t+\tau_o>}$, given an estimated policy set-point $\mathbf{z}_d^{<t+1,t+\tau_o>}$ :

$$Q^*(\mathbf{s}, \mathbf{z}_d) = \max_{\pi} \mathbb{E}\left[ R^{<\hat{t}>} | \mathbf{s}^{<\hat{t}>} = \mathbf{s}, \mathbf{z}_d^{<t+1,t+\tau_o>} = \mathbf{z}_d, \pi \right] , \qquad (15)$$

where $\pi$ is a behavioral policy, or action, which is a probability density function over a set of possible actions that can take place in a given state. The optimal action-value function $Q^*(\cdot,\cdot)$ maps a given state to the optimal behavior policy of the agent in any state:

$$\forall \mathbf{s} \in S : \pi^*(\mathbf{s}) = \operatorname*{argmax}_{\mathbf{z}_d \in Z_d} Q^*(\mathbf{s}, \mathbf{z}_d) . \qquad (16)$$

The optimal action-value function $Q^*(\cdot,\cdot)$ satisfies the Bellman optimality equation [7], which is a recursive formulation of Eq. 15:

$$Q^*(\mathbf{s}, \mathbf{z}_d) = \sum_{\mathbf{s}} \mathcal{T}_{\mathbf{s},\mathbf{z}_d}^{\mathbf{s}'} \left( R_{\mathbf{s},\mathbf{z}_d}^{\mathbf{s}'} + \gamma \cdot \max_{\mathbf{z}_d'} Q^*(\mathbf{s}', \mathbf{z}_d') \right)$$

$$= \mathbb{E}_{\mathbf{z}_d'} \left( R_{\mathbf{s},\mathbf{z}_d}^{\mathbf{s}'} + \gamma \cdot \max_{\mathbf{z}_d'} Q^*(\mathbf{s}', \mathbf{z}_d') \right), \tag{17}$$

where $\mathbf{z}_d = \mathbf{z}_d^{<t+1,t+\tau_o>}$, $\mathbf{s}' = \mathbf{s}^{<t+\tau_o>}$ represents a possible state visited after $\mathbf{s} = \mathbf{s}^{<t>}$ and $\mathbf{z}_d' = \mathbf{z}_d'^{<t+1,t+\tau_o>}$ is the corresponding behavioral policy, or action. The model-based policy iteration algorithm can be introduced, as the Bellman equation is a contraction mapping when written as an operator v:

$$\forall Q, \lim_{n\to\infty} v^{(n)}(Q) = Q^*. \tag{18}$$

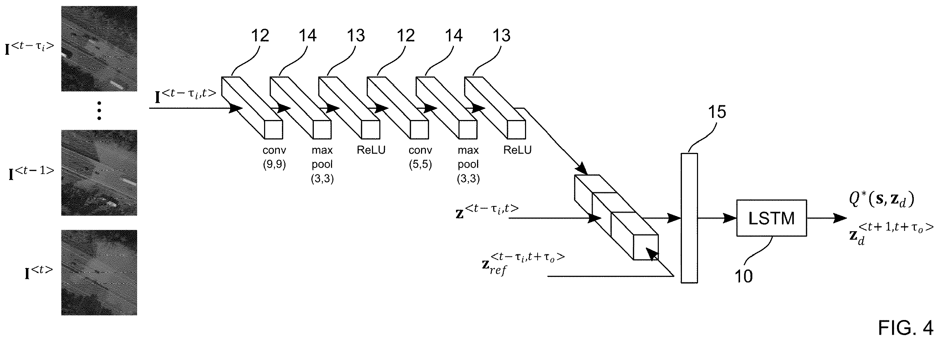

However, the standard reinforcement learning method described above is not feasible due to the high dimensional observations space. In autonomous driving applications, the observation space is mainly composed of sequences of sensory information made up of images, radar, Lidar, etc. Instead of the traditional approach, a non-linear parametrization of $Q^*(\cdot,\cdot)$ for autonomous driving is used, encoded in the deep neural network illustrated in Fig. 4. Such a non-linear approximator is called a deep Q-network (DQN) and is used for estimating the approximate action-value function:

$$Q\left(\mathbf{s}^{<t>}, \mathbf{z}_d^{<t+1,t+\tau_o>}; \Theta\right) \approx Q^*\left(\mathbf{s}^{<t>}, \mathbf{z}_d^{<t+1,t+\tau_o>}\right), \tag{18}$$

where $\Theta = [\mathbf{W}_i, \mathbf{U}_i, \mathbf{b}_i]$ are the parameters of the deep Q-network.

In the deep Q-network of Fig. 4, the environment observation inputs $\mathbf{I}^{<t-\tau_i,t>}$ are firstly passed through a series of convolutional layers 12, activation layers 13, and max pooling layers 14 of a convolutional neural network. This builds an abstract representation which is stacked on top of the previous system's states $\mathbf{z}^{<t-\tau_i,t>}$ and reference trajectory $\mathbf{z}_{ref}^{<t-\tau_i,t+\tau_o>}$. The stacked representation is processed by a fully connected neural network layer 15 of 256 units, before being fed as input to a long short-term memory network 10. The final output returns the optimal action-value function $Q^*(\cdot,\cdot)$, together with the desired policy $\mathbf{z}_d = \mathbf{z}_d^{<t+1,t+\tau_o>}$, which represents the desired input to the nonlinear model predictive controller. While during training the environment observation inputs $\mathbf{I}^{<t-\tau_i,t>}$ consist of synthetic and real-world observation sequences, during runtime the optimal action-value function $Q^*(\mathbf{s}, \mathbf{z}_d)$ and the desired state trajectory $\mathbf{z}_d^{<t+1,t+\tau_o>}$ is computed solely from real-world observation sequences, e.g. from occupancy grid sequences.

By taking into account the Bellman optimality equation Eq. 17, it is possible to train a deep Q-network in a reinforcement learning manner through the minimization of the mean squared error. The optimal expected Q value can be estimated within a training iteration $i$ based on a set of reference parameters $\overline{\Theta}_i$ calculated in a previous iteration $i'$:

$$\mathbf{z}_d = R_{\mathbf{s},\mathbf{z}_d}^{\mathbf{s}'} + \gamma \cdot \max_{\mathbf{z}_d'} Q(\mathbf{s}', \mathbf{z}_d'; \overline{\Theta}_i), \tag{20}$$

where $\overline{\Theta}_i := \Theta_{i'}$. The new estimated network parameters at training step $i$ are evaluated using the following squared error function:

$$\widehat{\Theta}_i = \min_{\Theta_i} \mathbb{E}_{\mathbf{s},\mathbf{z}_d,r,\mathbf{s}'} \left[ (\mathbf{z}_d - Q(\mathbf{s}, \mathbf{z}_d; \Theta_i)^2) \right], \tag{21}$$

where $r = R_{s,z_d}^{s'}$. Based on Eq. 21, the maximum likelihood estimation function from Eq. 11 is applied for calculating the weights of the deep Q-network. The gradient is approximated with random samples in the backpropagation through time algorithm, which uses stochastic gradient descent for training:

$$\nabla_{\Theta_i} = \mathbb{E}_{s,z_d,r,s'}\left[\left(z_d - Q(s, z_d; \Theta_i)\right)\nabla_{\Theta_i}\left(Q(s, z_d; \Theta_i)\right)\right]. \quad (22)$$

In comparison to traditional deep reinforcement learning setups, where the action space consisted of only a couple of actions, such as left, right, accelerate, decelerate, in the present approach the action space is much larger and depends on the prediction horizon $\tau_o$.

The behavioral model is trained solely on synthetic simulation data obtained from GridSim. GridSim is an autonomous driving simulation engine that uses kinematic models to generate synthetic occupancy grids from simulated sensors. It allows for multiple driving scenarios to be easily represented and loaded into the simulator.

The disturbance $g(\cdot)$ is modelled on top of the behavioral model $h(\cdot)$, both models being functions dependent on $s^{<t>}$. The learned disturbance model depends on disturbance observations from real-world data, collected during test trials with the real agent.

In order to capture disturbances present in real-world applications, the weights of the Q-network of Fig. 4 are adapted using real-world training data and the Q-learning algorithm implemented in Eq. 21 and Eq. 22.

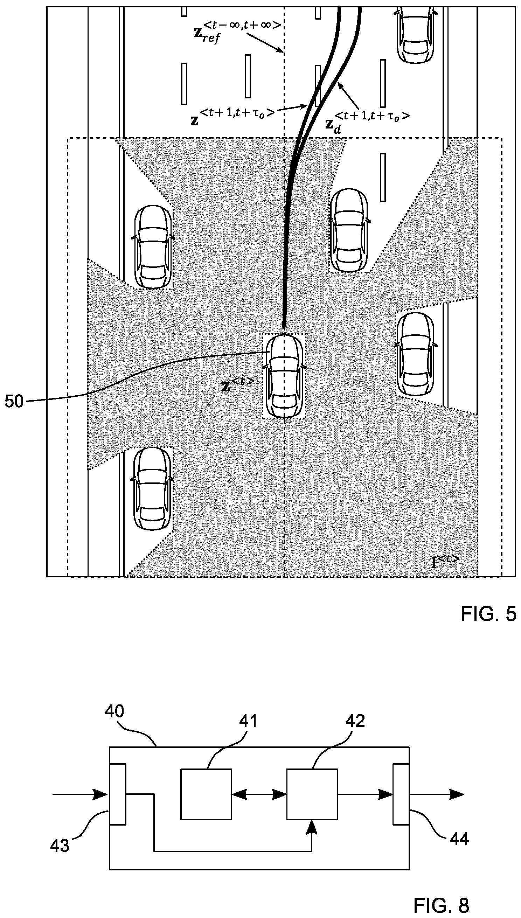

Fig. 5 illustrates an autonomous driving problem space. Given a reference trajectory route $\mathbf{z}_{ref}^{<t-\infty,t+\infty>}$, a sequence of observations $\mathbf{I}^{<t-\tau_i,t>}$ and past vehicle states $\mathbf{z}^{<t-\tau_i,t>}$, stored in the augmented memory component, the aim is to estimate the optimal driving control action $\mathbf{u}_{opt}^{<t+1>}$ at time $t + a$, such that the vehicle follows an optimal future state trajectory $\mathbf{z}^{<t+1,t+\tau_o>}$. The optimal future states are calculated by the constrained nonlinear model predictive controller, based on the desired states $\mathbf{z}_d^{<t+1,t+\tau_o>}$ estimated by the behavioral model $h(\cdot)$ and the disturbance model $g(\cdot)$.

The vehicle is modeled based on the single-track kinematic model of a robot, with kinematic state $\mathbf{z}^{<t>} = (x^{<t>}, y^{<t>}, \rho^{<t>})$ and no-slip assumptions. $x$, $y$, and $\rho$ represent the position and heading of the vehicle in the 2D driving plane, respectively. The motivation for this specific model comes from a comparison in [8], where both the kinematic and dynamic models have been evaluated with respect to the statistics of the forecast error provided by a model predictive control system. The single-track model, also known as the car-like robot, or the bicycle model, consists of two wheels connected by a rigid link. The wheels are restricted to move in a 2D plane coordinate system.

At sampling time $\Delta t$ two control actions are applied, i.e. the linear and angular velocities, $\mathbf{u}^{<t>} = (v^{<t>}, \omega^{<t>})$. The nominal process model for the vehicle is defined as:

$$\mathbf{f}(\mathbf{z}^{<t>}, \mathbf{u}^{<t>}) = \mathbf{z}^{<t>} + \begin{bmatrix} \cos\rho^{<t>}\cdot\Delta t & 0 \\ \sin\rho^{<t>}\cdot\Delta t & 0 \\ 0 & \Delta t \end{bmatrix}. \quad (23)$$

When acquiring training samples, the historic position state $\mathbf{z}^{<t-\tau_i,t>}$, the sensory information $\mathbf{I}^{<t-\tau_i,t>}$, the reference trajectory $\mathbf{z}_{ref}^{<t-\tau_i,t+\tau_o>}$, and the control actions $\mathbf{u}^{<t-\tau_i,t>}$ recorded from a human driver are stored as sequence data. Data acquisition is performed both in the GridSim simulation environment, as well as in real-world driving scenarios. The reference trajectory is stored over a finite time horizon $[t - \tau_i, t + \tau_o]$. This data is used by the Q-learning algorithm to adapt the weights of the deep neural network of Fig. 4, as described above. Once trained, the network can be queried for the optimal desired vehicle trajectory $\mathbf{z}_d^{<t+1,t+\tau_o>}$.

By way of example, the driving environment is observed using occupancy grids constructed from fused raw radar data. A single occupancy grid corresponds to an observation instance $\mathbf{I}^{<t>}$, while a sequence of occupancy grids is denoted as $\mathbf{I}^{<t-\tau_i,t>}$. These observations are axis-aligned discrete grid sequences in the time interval $[t - \tau_i, t]$, centered on the vehicle positions $(x^{<t-\tau_i,t>}, y^{<t-\tau_i,t>})$.

Occupancy grids provide a birds-eye perspective of the traffic scene. The basic idea behind occupancy grids is the division of the environment into 2D cells, each cell representing the probability, or belief, of occupation through color-codes. Pixels of a first color represent free space, a second color marks occupied cells or obstacles, and a third color signifies an unknown occupancy. The intensity of the color may represent the degree of occupancy. For example, the higher the intensity of the first color is, the higher is the probability of a cell to be free.

It is assumed that the driving area should coincide with free space, while non-drivable areas may be represented by other traffic participants, road boundaries, buildings, or other obstacles. Occupancy grids are often used for environment perception and navigation. By way of example, the occupancy grids may be constructed using the Dempster-Shafer theory, also known as the theory of evidence or the theory of belief functions. As indicated before, synthetic data can be generated in GridSim based on an occupancy grid sensor model.

The localization of the vehicle, that is, the computation of position state estimate $\hat{z}^{<t>}$, may be obtained through the fusion of the wheel's odometry and the double integration of the acceleration acquired from an inertial measurement unit (IMU) via Kalman filtering.

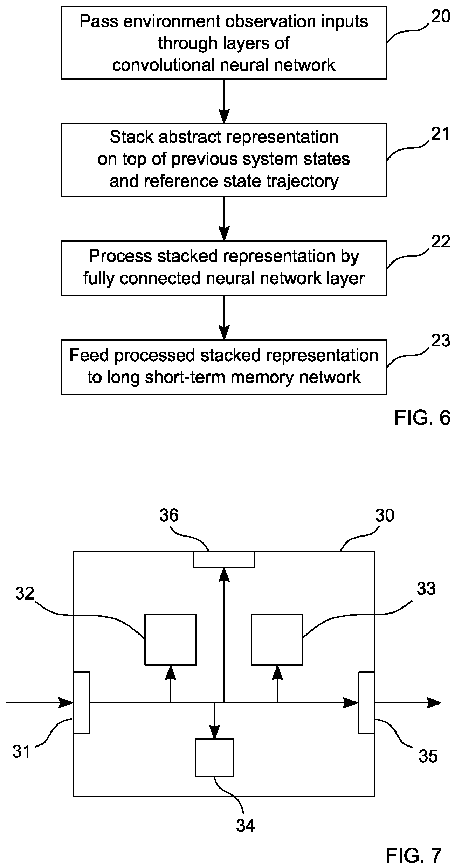

Fig. 6 schematically illustrates a method for training the controller according to the invention. In a first step, environment observation inputs are passed 20 through a series of convolutional layers, activation layers, and max pooling layers to build an abstract representation. The environment observation inputs may comprise synthetic or real-world occupancy grids. The abstract representation is stacked 21 on top of previous system states and a reference state trajectory. The stacked representation is then processed 22 by a fully connected neural network layer.

Finally, the processed stacked representation is fed 23 as an input to a long short-term memory network.

Fig. 7 schematically illustrates a block diagram of a first embodiment of an apparatus 30 for training the controller according to the invention. The apparatus 30 has an input 31 for receiving data, in particular environment observation inputs. The environment observation inputs may comprise synthetic or real-world occupancy grids. The apparatus 30 further has a processor 32, which is configured to pass environment observation inputs through a series of convolutional layers, activation layers, and max pooling layers to build an abstract representation. The processor 32 is further configured to stack the abstract representation on top of previous system states and a reference state trajectory, and to process the stacked representation by a fully connected neural network layer. The processed stacked representation may be fed as an input to a long short-term memory network via an output 35. A local storage unit 34 is provided, e.g. for storing data during processing. The output 35 may also be combined with the input 31 into a single bidirectional interface.

The processor 32 may be controlled by a controller 33. A user interface 36 may be provided for enabling a user to modify settings of the processor 32 or the controller 33. The processor 32 and the controller 33 can be embodied as dedicated hardware units. Of course, they may likewise be fully or partially combined into a single unit or implemented as software running on a processor, e.g. a CPU or a GPU.

A block diagram of a second embodiment of an apparatus 40 for training the controller according to the invention is illustrated in Fig. 8. The apparatus 40 comprises a processing device 41 and a memory device 42. For example, the apparatus 40 may be a computer, a workstation or a distributed system. The memory device 42 has stored instructions that, when executed by the processing device 41, cause the apparatus 40 to perform steps according to one of the described methods. The instructions stored in the memory device 42 thus tangibly embody a program of instructions executable by the processing device 41 to perform program steps as described herein according to the present principles. The apparatus 40 has an input 43 for receiving data. Data generated by the processing device 41 are made available via an output 44. In addition, such data may be stored in the memory device 42. The input 43 and the output 44 may be combined into a single bidirectional interface.

The processing device 41 as used herein may include one or more processing units, such as microprocessors, digital signal processors, or a combination thereof.

The local storage unit 34 and the memory device 42 may include volatile and/or non-volatile memory regions and storage devices such as hard disk drives, optical drives, and/or solid-state memories.

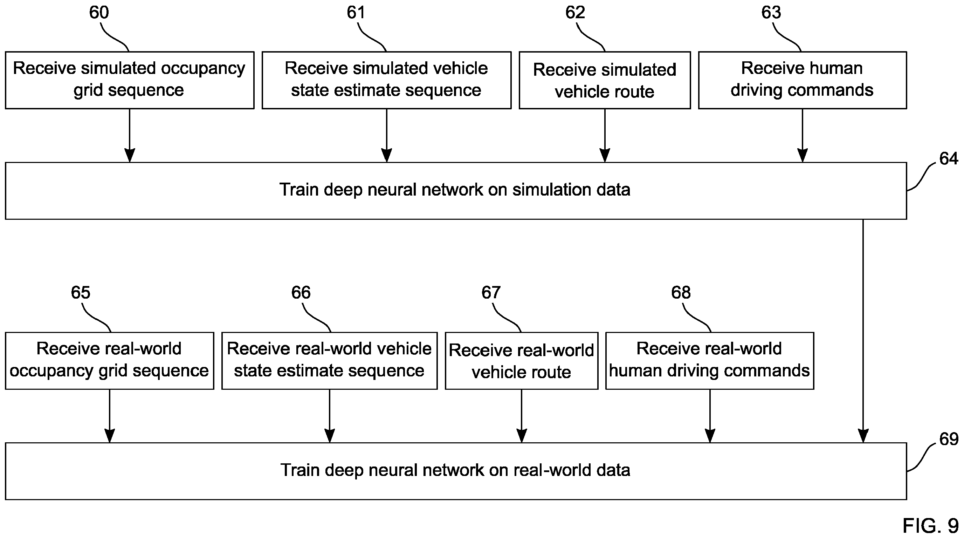

The complete training workflow of the deep neural network of Fig. 4 is depicted in Fig. 9. A simulated occupancy grid sequence is received 60 from the augmented memory component. Furthermore, also a simulated vehicle state estimate sequence is received 61 from the augmented memory component. In addition, a simulated vehicle route is received 62. Finally, human driving commands are received 63 as driving labels. The deep neural network, i.e. its convolutional neural networks and the at least one long short-term memory, are then trained 64 on the simulation data using the Q-learning algorithm described above.

In addition to the simulation data, also real-world data are used for training. To this end, a real-world occupancy grid sequence is received 65. Furthermore, a real-world vehicle state estimate sequence is received 65. In addition, a real-world vehicle route is received 67. Finally, real-world human driving commands are received 68 as driving labels. The deep neural network, which was initialized in the training step 64, is then trained 69 on the real-world data using the Q-learning algorithm.

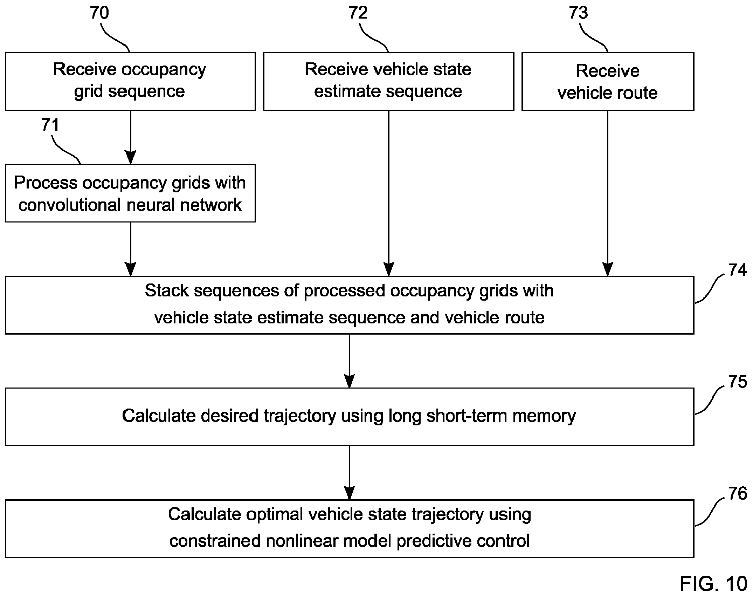

A complete deployment workflow of the deep neural network of Fig. 4 is illustrated in Fig. 10. An occupancy grid sequence is received 70 from the augmented memory component. Each occupancy grid in the sequence is processed 71 using a convolutional neural network. Furthermore, a vehicle state estimate sequence is received 72 from the augmented memory component. Finally, a vehicle route is received 73. The sequences of occupancy grids processed by a convolutional neural network is then stacked 74 with the vehicle state estimate sequence and the vehicle route. Based on this stacked data, a desired trajectory is calculated 75 using a long short-term memory. Finally, an optimal vehicle state trajectory is calculated 76 using constrained nonlinear model predictive control.

Further embodiments pertain to:

(1) A controller for an autonomous or semi-autonomous vehicle, characterized in that the controller is configured to use an a priori process model in combination with a behavioral model and a disturbance model, wherein the behavioral model is responsible for estimating a behavior of a controlled system in different operating conditions and to calculate a desired trajectory for a constrained nonlinear model predictive controller, and wherein the disturbance model is used for compensating disturbances.

(2) The controller of (1), wherein the behavioral model and the disturbance model are encoded within layers of a deep neural network.

(3) The controller of (2), wherein the deep neural network is a recurrent neural network.

(4) The controller of (2) or (3), wherein the deep neural network is composed of two or more convolutional neural networks and at least one long short-term memory.

(5) A computer program code comprising instructions, which, when executed by at least one processor, cause the at least one processor to implement the controller of any of (1) to (4).

(6) A nonlinear approximator for an automatic estimation of an optimal desired trajectory for an autonomous or semi-autonomous vehicle, characterized in that the approximator is configured to use a behavioral model and a disturbance model, wherein the behavioral model is responsible for estimating a behavior of a controlled system in different operating conditions and to calculate a desired trajectory, and wherein the disturbance model is used for compensating disturbances.

(7) The nonlinear approximator of (6), wherein the behavioral model and the disturbance model are encoded within layers of a deep neural network.

(8) The nonlinear approximator of (7), wherein the deep neural network is a recurrent neural network.

(9) The nonlinear approximator of (7) or (8), wherein the deep neural network is composed of two or more convolutional neural networks and at least one long short-term memory.

(10) A computer program code comprising instructions, which, when executed by at least one processor, cause the at least one processor to implement the nonlinear approximator of any of (6) to (9).

(11) A method for training the controller of any of (1) to (4), the method comprising:

- passing environment observation inputs through a series of convolutional layers, activation layers, and max pooling layers to build an abstract representation;
- stacking the abstract representation on top of previous system states and a reference state trajectory;
- processing the stacked representation by a fully connected neural network layer; and
- feeding the processed stacked representation as an input to a long short-term memory network.

(12) The method of (11), wherein the environment observation inputs comprise synthetic and real-world training data.

(13) A computer program code comprising instructions, which, when executed by at least one processor, cause the at least one processor to perform the method of (11) or (12) for training the controller of (1) to (4).

(14) An apparatus for training the controller of any of (1) to (4), the apparatus comprising a processor configured to:

- pass environment observation inputs through a series of convolutional layers, activation layers, and max pooling layers to build an abstract representation;
- stack the abstract representation on top of previous system states and a reference state trajectory;
- process the stacked representation by a fully connected neural network layer ; and

- feed the processed stacked representation as an input to a long short-term memory network.

(15) An autonomous or semi-autonomous vehicle comprising a controller according to any of (1) to (4).

References

[1] C. Katrakazas et al.: "Real-time motion planning methods for autonomous on-road driving: State-of-the-art and future research directions", Transportation Research Part C: Emerging Technologies, Vol. 60 (2015), pp. 416-442.

[2] M. Bojarski et al.: "End to end learning for self-driving car", arXiv preprint arXiv:1604.07316(2016), http://arxiv.org/abs/1604.07316.

[3] V. Mnih et al: "Human-level control through deep reinforcement learning", Nature, Vol. 518 (2015), pp. 529-533.

[4] D. Q. Mayne et al.: "Constrained model predictive control: Stability and optimality", AUTOMATICA, Vol. 36 (2000), pp. 789-814.

[5] R. Sutton et al.: "Introduction to Reinforcement Learning", MIT Press 1998.

[6] R. Fletcher: "Practical Methods of Optimization", 2nd ed., John Wiley & Sons, 1987.

[7] R. Bellman: "Dynamic Programming", Princeton University Press, 1957.

[8] J. Kong et al.: "Kinematic and dynamic vehicle models for autonomous driving control design", 2015 IEEE Intelligent Vehicles Symposium (VP), pp. 1094-1099.

**Claims**

1. A nonlinear approximator (9) for use in a controller (1) for an automatic estimation of an optimal desired trajectory of an autonomous or semi-autonomous vehicle (50) for a constrained nonlinear model predictive controller (8), **characterized in that** the approximator (9) is configured to use a learned behavioral model (2) and a learned disturbance model (3), which are encoded within layers of a deep neural network, wherein the behavioral model (2) is responsible for estimating a behavior of a controlled system in different operating conditions and to calculate a desired trajectory, and wherein the disturbance model (3) is used for compensating disturbances.

2. The nonlinear approximator (9) according to claim 1, wherein the deep neural network is a recurrent neural network.

3. The nonlinear approximator (9) according to claim 1 or 2, wherein the deep neural network is composed of two or more convolutional neural networks (11) and at least one long short-term memory (10).

4. A computer program code comprising instructions, which, when executed by at least one processor, cause the at least one processor to implement the nonlinear approximator (9) of any of claims 1 to 3.

5. A method for training a controller (1), the method comprising:

    - passing (20) environment observation inputs through a series of convolutional layers (12), activation layers (13), and max pooling layers (14) to build an abstract representation;
    - stacking (21) the abstract representation on top of previous system states and a reference state trajectory;
    - processing (22) the stacked representation by a fully connected neural network layer (15); and
    - feeding (23) the processed stacked representation as an input to a long short-term memory (10) network.

6. The method according to claim 5, wherein the environment observation inputs comprise synthetic and real-world training data.

7. A computer program code comprising instructions, which, when executed by at least one processor, cause the at least one processor to perform the method of claim 5 or 6 for training a controller (1).

8. An apparatus (30) for training a controller (1), the apparatus (30) comprising a processor (32) configured to:

- pass (20) environment observation inputs through a series of convolutional layers (12), activation layers (13), and max pooling layers (14) to build an abstract representation;
- stack (21) the abstract representation on top of previous system states and a reference state trajectory;
- process (22) the stacked representation by a fully connected neural network layer (15); and
- feed (23) the processed stacked representation as an input to a long short-term memory (10) network.

FIG. 1

a)

b)

FIG. 3

FIG. 2

$Q^*(\mathbf{s}, \mathbf{z}_d)$

$\mathbf{z}_d^{<t+1, t+\tau_o>}$

LSTM

10

15

13 ReLU

14 max pool (3,3)

12 conv (5,5)

13 ReLU

14 max pool (3,3)

12 conv (9,9)

$\mathbf{z}^{<t-\tau_i, t>}$

$\mathbf{z}_{ref}^{<t-\tau_i, t+\tau_o>}$

$\mathbf{I}^{<t-\tau_i, t>}$

$\mathbf{I}^{<t-\tau_i>}$

$\mathbf{I}^{<t-1>}$

$\mathbf{I}^{<t>}$

FIG. 4

18

$$\mathbf{z}_{ref}^{<t-\infty,t+\infty>}$$

$$\mathbf{z}^{<t+1,t+\tau_o>}$$

$$\mathbf{z}_d^{<t+1,t+\tau_o>}$$

50

$$\mathbf{z}^{<t>}$$

$$\mathbf{I}^{<t>}$$

FIG. 5

40

41

42

43

44

FIG. 8

```
┌─────────────────────────────────────┐
│ Pass environment observation inputs │      20
│          through layers of          │
│     convolutional neural network    │
└─────────────────────────────────────┘
                    │
                    ▼
┌─────────────────────────────────────┐
│     Stack abstract representation    │      21
│    on top of previous system states  │
│     and reference state trajectory   │
└─────────────────────────────────────┘
                    │
                    ▼
┌─────────────────────────────────────┐
│     Process stacked representation by │     22
│      fully connected neural network layer │
└─────────────────────────────────────┘
                    │
                    ▼
┌─────────────────────────────────────┐
│  Feed processed stacked representation │     23
│     to long short-term memory network  │
└─────────────────────────────────────┘
```

FIG. 6

FIG. 7

FIG. 9

| | | | |
|---|---|---|---|
| 60 | 61 | 62 | 63 |
| Receive simulated occupancy grid sequence | Receive simulated vehicle state estimate sequence | Receive simulated vehicle route | Receive human driving commands |

64 — Train deep neural network on simulation data

| | | | |
|---|---|---|---|
| 65 | 66 | 67 | 68 |
| Receive real-world occupancy grid sequence | Receive real-world vehicle state estimate sequence | Receive real-world vehicle route | Receive real-world human driving commands |

69 — Train deep neural network on real-world data

70

Receive occupancy
grid sequence

72

Receive vehicle state
estimate sequence

73

Receive
vehicle route

71

Process occupancy grids with
convolutional neural network

74

Stack sequences of processed occupancy grids with
vehicle state estimate sequence and vehicle route

75

Calculate desired trajectory using long short-term memory

76

Calculate optimal vehicle state trajectory using
constrained nonlinear model predictive control

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. KATRAKAZAS et al.** Real-time motion planning methods for autonomous on-road driving: State-of-the-art and future research directions. *Transportation Research Part C: Emerging Technologies,* 2015, vol. 60, 416-442
- **M. BOJARSKI et al.** End to end learning for self-driving car. *arXiv preprint arXiv:1604.07316,* 2016, http://arxiv.org/abs/1604.07316
- **V. MNIH et al.** Human-level control through deep reinforcement learning. *Nature,* 2015, vol. 518, 529-533

- **D. Q. MAYNE et al.** Constrained model predictive control: Stability and optimality. *AUTOMATICA,* 2000, vol. 36, 789-814
- **R. SUTTON et al.** Introduction to Reinforcement Learning. MIT Press, 1998
- **R. FLETCHER.** Practical Methods of Optimization. John Wiley & Sons, 1987
- **R. BELLMAN.** Dynamic Programming. Princeton University Press, 1957
- **J. KONG et al.** Kinematic and dynamic vehicle models for autonomous driving control design. *IEEE Intelligent Vehicles Symposium (VP),* 2015, 1094-1099